# EUROPEAN PATENT SPECIFICATION

(11) **EP 2 668 839 B1**
(45) Date of publication and mention of the grant of the patent: **01.12.2021**
(21) Application number: 13170127.8
(22) Date of filing: 31.05.2013
(51) Int. Cl.: A01G 3/00, B02C 18/14, B02C 18/22

(54) **SHREDDING SYSTEM**
HÄCKSELVORRICHTUNG
DISPOSITIF DE BROYAGE

(30) Priority: 01.06.2012 BE 201200371
(43) Date of publication of application: 04.12.2013
(73) Proprietor: Feltron NV, 8553 Otegem (BE)
(72) Inventor: Lietaer, Frederic, 8553 Otegem (BE)
(74) Representative: Chielens, Kristof

(56) References cited:
- EP-A1- 0 785 026
- EP-A1- 1 161 998
- WO-A1-01/49418
- DE-A1- 3 631 337
- US-A- 4 875 630
- US-A- 5 240 188

## Description

The present invention relates to a shredder for comminuting organic material to form shreds, as described in the introductory part of claim 1. The present invention relates in particular to a green waste shredder for shredding garden waste, prunings, flowers, branches, leaves, agricultural crops, foliage, etc.

Shredders are used to shred (cut) trimmings, such as prunings, branches, leaves, agricultural crops, foliage, etc. originating from nature and landscape management or agriculture. Many different systems are already known for shredding organic material. Following shredding, the shreds leave the shredding chamber via the discharge side.

A first known system is the impact shredder, in which a number of cutting blades are fitted on the face of a large disc against which the organic material is pressed during introduction in an introduction funnel, optionally via feed rollers, and is transversely cut between the cutting blades and a counterblade.

A second known system is the corkscrew shredder, in which a number of cutting blades are fitted in the longitudinal direction of a drum wall. The organic material is pressed against the drum wall, as a result of which said material is transversely cut between the cutting blades and a counterblade.

With the abovementioned (first) group of systems, shreds of fixed sizes are produced directly as soon as the organic material comes into contact with the cutting blades. Such shredders have the drawback that they are only suitable for shredding branches and are not very resistant to foreign objects, such as for example pebbles, sand, etc. In addition, these systems become clogged quite easily, as a result of which they are less suitable for processing moisture-rich organic material.

In order to be able to process not only branches, but other waste, such as garden waste, flowers, leaves, agricultural crops, foliage and the like as well, use is currently made of a second group of systems, which may either be a hammer or flail system, wherein the organic material is comminuted by means of flails or hammers, or the shredder which is described, inter alia, in European patent EP 1 480 752, which uses an anvil and group of cutting blades fitted on a shaft which are rotatably arranged in front of the anvil.

With the second group of systems which are suitable for processing mainly green waste, the discharge side of the shredding chamber is provided with a grille with passage openings for calibrating the shreds, a so-called calibration grille. In this way, only the shreds which have been comminuted to a suitable size by the action of the cutting means can leave the device. With this group, contrary to the first group, the shreds are not formed immediately. The shreds are formed in two stages, as it were. First, a 'large' irregular piece is produced which is subsequently comminuted in the shredding chamber to the desired size. The calibration grille determines how long the shreds remain inside the shredding chamber. A drawback of the second group of systems is that the grille apertures of the calibration grille easily become clogged, as a result of which these systems are also less suitable for processing moist material. Furthermore, the calibration grille forms an obstacle during the discharge of the shredded material, as a result of which a part of the available capacity is lost.

Furthermore, as described in US 4,875,630, it is known to provide a shredder with a fan in order to either suck up soft organic material, such as for example leaves and twigs, following which it is comminuted by means of loosely suspended cutting elements in order to prevent damage to the shredder as a result of sucked-up pebbles and/or hard objects, or, as described in US 5,240,188, to displace the material supplied, in particular leaves and relatively small branches (diameter ± 2.5 cm), between the introduction and discharge opening, in which case the material supplied is comminuted by means of rotatable flinger bars during this displacement. In order to prevent blockage, guide rods are provided, inter alia between said flinger bars. The devices described in US 4,875,630 and US 5,240,188 inter alia have the drawback that they are limited to leaves. However, US 5,240,188 describes an embodiment which also allows relatively small branches (up to 2.5 cm) to be processed. In this case, shredding is carried out in two stages, with the supplied material in a first step being comminuted by two cutting blade shafts which are rotatable in opposite directions, before the material comes into contact with the rotatable flinger bars or flails. According to this publication, it is furthermore possible to process relatively large branches (up to 10 cm diameter) via an alternative inlet on a separate, third shredding module. However, such a shredder is complicated and expensive. In addition, the trimmings have to be presorted.

Other shredders are described in EP 1 161 998 A1 or US 5 240 188 A.

It is now an object of the present invention to provide a shredder which is suitable in particular to process substantially green waste, and to process this material which not only comprises small, soft or moist organic material (diameter < 2.5 cm), but also hard and relatively thick (diameter from 2.5 cm to 15 cm and larger) organic material, in which the presence of a calibration grille is no longer required in order to comminute the shreds to the required size due to the fact that the calibration will be carried out in an alternative manner.

The object of the invention is achieved by providing a shredder for comminuting organic material to form shreds, according to claim 1. Preferably, the shredder has at most one introduction funnel which is suitable for manually supplying organic material.

In contrast to the known shredders, the shredder according to the present invention no longer has a direct discharge opening to the environment in the shredding chamber, as a result of which the shreds formed cannot leave the device until they have passed through the fan chamber. In addition, no calibration grille is provided. The calibration of the shreds mainly takes place in the shredding chamber. The shredder according to the present invention comprises a number of technical concepts in order to increase the residence time of the shreds in the shredding chamber and thus to control the calibration thereof. To this end, the shreds have to remain in the shredding chamber for a sufficiently long period of time. In order to increase the residence time of the shreds in the shredding chamber, a passage is provided which is situated centrally between the shredding chamber and fan chamber. In addition to the presence of said passage, which results in the formation of two different chambers, as it were, and in which a constriction is situated at the transition between the two chambers, the device comprises obstruction means which are configured to counteract the shred-conveying airflow between the two different chambers in order to increase the residence time of the shreds in the shredding chamber.

The suction force generated by the fan will always move the shreds in the shredding chamber in the direction of the passage. In order to achieve a good calibration, it is important for the shreds to remain in the shredding chamber for a sufficiently long period of time. To this end, a counterforce is generated in the shredder according to the invention which acts counter to the suction force and ensures that the shreds remain in the shredding chamber for longer and thus have a greater chance of being cut. To this end the cutting face of a number of cutting blades has a bevel which is positioned in such a manner that, in use, the shreds formed are projected in a direction away from the passage. By selecting the number of these counteracting bevels, it is possible to influence the calibration.

In a preferred embodiment of the shredder according to the invention, the size of the passage is adjustable and/or the shape of the passage is adjustable. By varying the size and/or shape of the passage, it is also possible to vary the residence time in the shredding chamber. The size and/ or shape of the passage can be adjusted by fitting specific inserts or by providing adjustable movable segments which are configured to make the passage opening larger or smaller.

In a particular embodiment of the shredder according to the invention, the cutting blades within one cutting blade group are fitted on the shaft in a manner offset with respect to each other, so that the projections of their cutting faces on the anvil do not coincide and cover the entire introduction width.

In a more particular embodiment of the shredder according to the invention, the cutting blades of cutting blade groups which have been fitted next to one another are situated offset opposite one another, so that each of these acts on the supplied organic material at a different point in time. Due to the fact that the cutting blades are offset with respect to one another, a rotating labyrinth is created in use, as it were, between which the shreds have to move in order to reach the passage. This also increases the residence time of the shreds in the shredding chamber and the frequency with which they come into contact with a cutting blade.

In a most particular embodiment of the shredder according to the invention, the cutting blades furthermore comprise a back face which is intended to slow down the speed of introduction of organic material into the shredding chamber.

According to an advantageous embodiment of the shredder according to the invention, the casing of the shredding chamber comprises one or more guide elements which are configured to guide the shreds which have been centrifugally hurled away back in the direction of the cutting means. Such an embodiment prevents the shreds in the narrow boundary zone, outside the reach of the cutting means, from moving in the direction of the passage.

According to a more advantageous embodiment of the shredder according to the invention, the casing of the shredding chamber comprises one or more hook-shaped restraining elements which are configured to slow down fibre strands. These restraining elements are positioned in such a manner that they are situated outside the cutting zone of the cutting blades so that no contact is possible between the cutting blades and said restraining elements. These restraining elements will slow down fibrous material, so that this can be cut completely and can no longer be wound around the cutting blade shaft.

In a preferred embodiment of the shredder according to the invention, the fan comprises a number of blades fitted on a shaft, in which one or more blades are provided with cutting elements so as to provide a supplementary cutting of the sucked-in shreds.

According to a particularly preferred embodiment of the shredder according to the invention, the fan comprises two vane-shaped blades which are configured to clean the casing surface of the fan chamber.

In order to further explain the properties of the present invention and to indicate additional advantages and features thereof, a more detailed description of the shredder according to the invention is now given below.

In this description, reference numerals are used to refer to the attached drawings, in which:
- *Fig. 1* *shows a perspective view of the shredder according to the invention;*
- *Fig. 2* *shows a detail view of a rotor provided with a number of cutting blade groups situated next to each other and a fan;*
- *Fig. 3* *shows a cross section of the shredder according to the invention, indicating a possible path (A) which shreds partly travel in the shredding chamber;*
- *Fig. 4* *shows an alternative embodiment of a shredder, in which the fan is configured as a vane-shaped element;*
- *Fig. 5* *shows a detail view of a cutting blade group, composed of four splitting blades;*
- *Fig. 6* *shows the adjustable passage opening, in which* *Fig. 6**.**1* *shows a shredder having a passage opening which is smaller than the passage opening of the shredder illustrated in* *Fig. 6**.**2**;*
- *Fig. 7* *shows a longitudinal section of the shredding chamber, in which an example according to the invention can be seen of the guide elements on the casing surface;*
- *Fig. 8* *shows a longitudinal section of an embodiment of the shredding chamber, the casing surface of which is provided with restraining elements.*

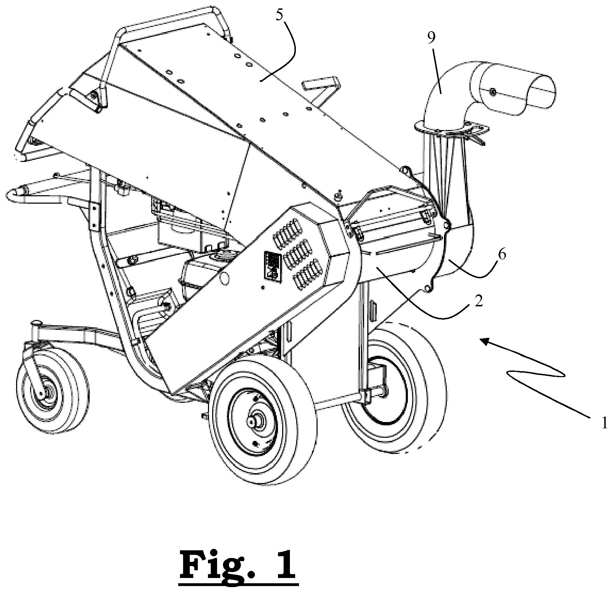

The shredder (1) according to the present invention and as illustrated in Fig. 1 comprises a shredding chamber (2) provided with rotatable cutting means (3) for shredding the organic material and an introduction funnel (5) configured to introduce the organic material into the shredding chamber (2). The introduction funnel (5) extends along a direction at right angles to the shaft (10) of the rotatable cutting means (3). The shredder according to the present invention has at most one introduction funnel (5) suitable for manually supplying organic material. However, it is evident that the introduction funnel (5) may also be filled mechanically, for example by means of a clamshell crane.

The material to be shredded is supplied via the introduction opening of the introduction funnel (5) and the introduction funnel (5) is connected to the shredding chamber (2) where the supplied material is then cut into shreds by means of rotatable cutting means (3). As soon as the material to be shredded comes into contact with the cutting means (3), this material is automatically pulled in due to the rotation of the cutting means (3).

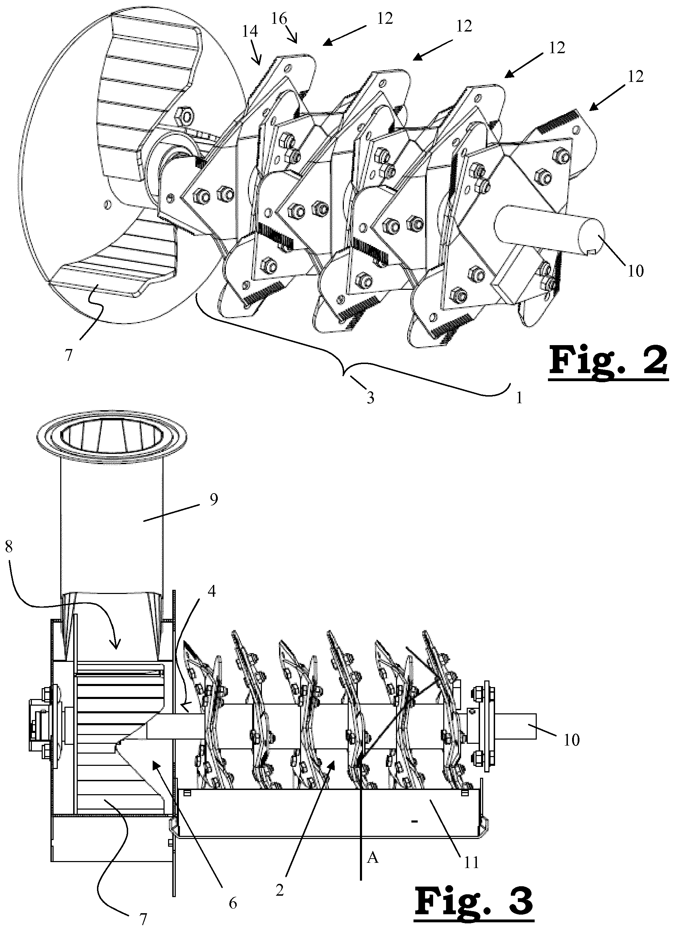

As can inter alia be seen in Fig. 3, the cutting means (3) comprise a rotor (10) which is set at right angles to the direction of introduction and is composed of a shaft onto the periphery of which at least two adjacent cutting blade groups (12) are fixedly fitted which are rotatably arranged in front of an anvil (11), in which said cutting blade groups (12) each comprise several fixed splitting blades which are intended for splitting the supplied material substantially according to the direction of introduction of the material. In a specific embodiment, the cutting blade groups (12) may furthermore be provided with at least one chopping blade which is intended to cut up the supplied organic material substantially at right angles to the direction of introduction of the material. The rotor (10) rotates in a housing.

With the known devices, the shredding chamber has a discharge opening in which a calibration screen (grille) is arranged, via which the shredded material is discharged. The calibration screen ensures that the material remains inside the shredding chamber, so that it can be cut further to form smaller particles. In other words, with the known systems, the size of the shreds is determined by the calibration screen which only allows through those shreds which fit through the openings of the screen. The shreds are forced through the screen by the cutting means and the generated centrifugal force and then fall onto the floor as a result of the effects of the force of gravity.

According to the present invention, the presence of a calibration screen (grille) is now no longer required in order to comminute the shreds to the appropriate size. To this end, the shredder (1) comprises a separate fan chamber (6) next to the shredding chamber. The fan chamber contains a rotatable fan (7). In order to allow the fan (7) to rotate, the fan (7) is also fitted on the same shaft (10) as that on which the cutting blade groups (12) are arranged. Via a passage (4) (port), the centre of which is also situated on the same shaft (10), the fan chamber (6) is connected to the shredding chamber (2). The fan (7) is configured to generate a suction force which is sufficient to suck the shreds from the shredding chamber (2) via the passage (4) and remove these from the fan chamber (6) via a discharge opening (8). The shredded material which is removed via the discharge opening (8) then ends up in a discharge pipe (9) via which it leaves the shredder.

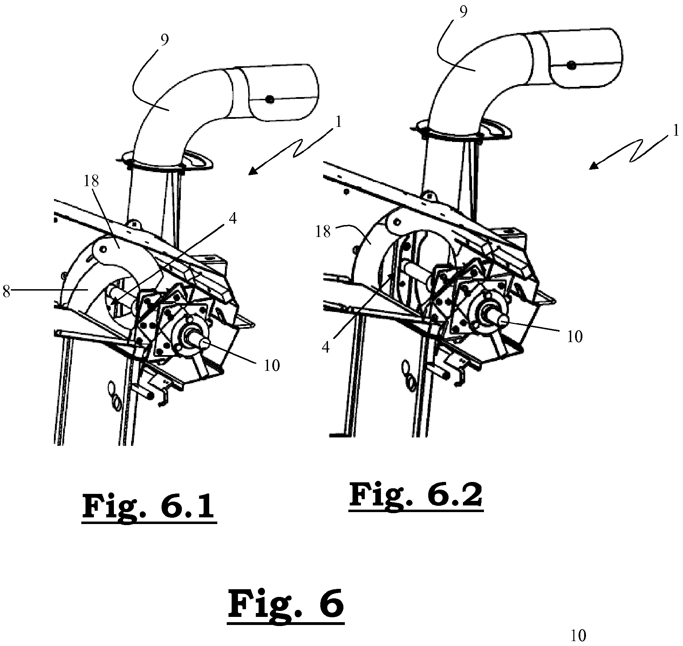

In the shredder according to the invention, the calibration of the shreds is determined by the time period for which the shreds remain in the shredding chamber (2) before being discharged. By varying the size and/or shape of the passage, it is also possible to vary the residence time in the shredding chamber. The size and/or shape of the passage can be adjusted by inserting specific inserts or movable segments (18). This can clearly be seen in Fig. 6, which shows that the size of the passage between the shredding chamber and fan chamber can be adjusted. Thus, the position of the segments (18) can be moved along a, for example, circular path via an adjusting means, such as for example a handle, resulting in a decrease (see Fig. 6.1) or an increase (see Fig. 6.2) in the size of the passage opening. When the size of the passage opening is reduced, the flow of the shreds towards the fan chamber will be impeded, as a result of which the shreds remain in the shredding chamber for longer, so that they are cut more often.

The suction force generated by the fan (7) will always pull shreds in the shredding chamber (2) towards the passage (4). In order to achieve good calibration, it is necessary to produce a counterforce which ensures that this flow of shreds in the direction of the passage (4) is counteracted, so that the shreds remain in the shredding chamber (2) for longer and thus have more chance of being cut by the cutting means (3).

The abovementioned flow of shreds is counteracted by providing obstruction means, as it were. This is achieved by providing the cutting face (14) of the cutting blades (13) with a specific bevel. The bevel of the cutting blades (13) ensures that, as soon as a shred come into contact with the cutting blades, it bounces off in a certain direction, as can be seen in Fig. 3 (see line A). The direction of this bouncing off of the shreds has to be as far away as possible from the direction towards the passage (4). The choice of the number of cutting faces which have such a bevel will determine the calibration; preferably at least 50% of the cutting faces present has a bevel which is positioned in such a manner that, in use, the shreds formed are flung in a direction away from the passage. Furthermore, the bevel of the cutting face (14) of the cutting blades which are arranged obliquely also has to ensure that the shreds are forced as much as possible towards the axis of the cutting blade shaft and not radially outwards, away from the cutting blades. Due to the centrifugal force, the shreds are forced to the periphery anyway and end up in a peripheral region surrounding the cutting blades, outside of their cutting range. This has to be prevented. In order to prevent the shreds from moving outside of the cutting range of the cutting means, in the direction of the passage (4), the casing of the shredding chamber (2) may be provided with guide elements which are suitable for continuously guiding the shreds in the direction of the cutting means (3), thus increasing the chance of additional cutting.

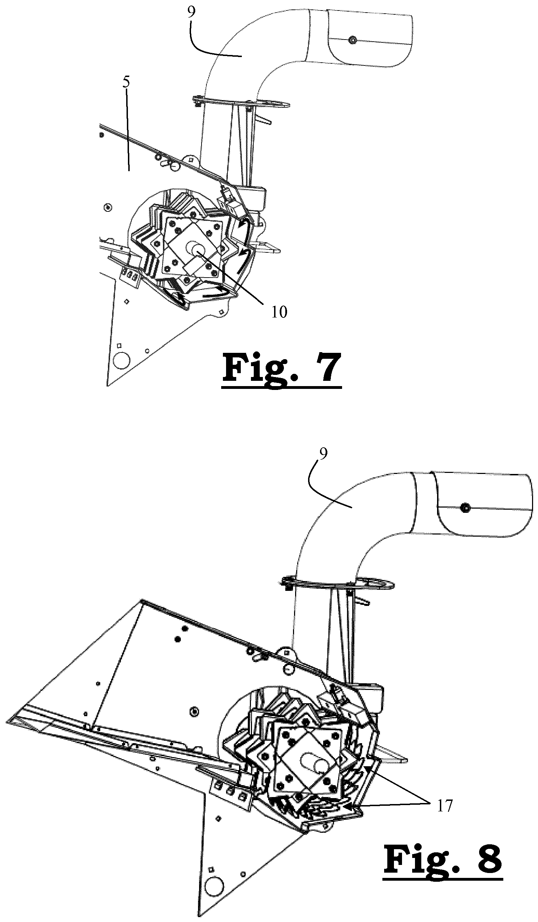

Fig. 7 shows a possible embodiment in which a part of the casing has a stepped configuration, as a result of which the shreds moving along the casing bounce off each step and end up in the path of the cutting blades, thus ensuring they are cut more often. In order to prevent organic material with a tough fibre-like structure from winding itself up like a lead, in an embodiment of the invention, restraining means (17) in the form of, for example, protuberances, are provided on the casing wall which function as barbs. As illustrated in the example from Fig. 8, the protuberances are positioned such that they are situated between the cutting zones of the cutting blades so the cutting blades cannot hit them. The shape of the protuberance is like that of a hook which is directed with its hooking direction counter to the direction of rotation of the cutting blades. The tip of the protuberances protrudes inside the circle of rotation of the cutting blade tips. As a result thereof, fibre strings are gripped by the hook-shaped protuberances, after which they are cut by the cutting blades.

The shape of the cutting blades (13) is also chosen such that a labyrinth is created, as it were, for the shreds to find their way to the passage (4). The cutting blades (13) have an edge (cutting face (14)) at the front and a long back or wing at the rear (back face (16)). As the cutting blades (13) are fitted to discs, the cutting blades (not taking into account their angular offset) are more or less in the same plane. The shreds which, as a result of the suction force at the location of the passage (4), move towards the passage (4), in fact move in a direction transverse to the cutting blade discs. In other words, the shreds have to move through the space between two consecutive cutting blades (13) on the same cutting blade disc in order to reach the passage (4). By providing a longer wing (16) at the rear of the cutting blades (13), the space between the cutting blades of the same cutting blade group (12) becomes smaller, as a result of which it becomes more difficult for the shreds to pass in between, thus increasing the chance of them being cut more often. Due to the fact that the cutting blade groups (12) are also offset with respect to each other, a rotating labyrinth is also created, through which the shreds have to move in order to reach the passage (4).

A shred is created when it is cut off from a larger part of wood or green waste. The originally cut-off piece is then optionally further reduced in size inside the shredding chamber (2). Another element which can be used to influence the size of the shreds is to reduce the size of the 'initial shreds'. In order to achieve this, it has to be possible to introduce green waste in a controlled manner. The constellation of the cutting blades is an open system in which trimmings can easily enter, thus often resulting in the size of the initial shreds being large and irregular. Due to the special shape of the cutting blades (13) with an extended back (16), the trimmings are retained for much longer and can thus not penetrate so easily in the space between two successive cutting blades, resulting in a reduction in size of the piece which is initially cut off. This reduces the need for subsequent size reduction and controlled calibration in the shredding chamber (2).

As the shape and size of the shreds are only assessed once they have left the shredder, it is also possible to still carry out a further reduction in size in the fan chamber (6), as the fan (7) is also a rotating element in the shredder which can in turn help to reduce the size of the shreds still further. In a possible embodiment, cutting blades are also fitted to some blades (vanes) of the fan (7) which cut the shreds once more when they emerge from the shredding chamber (2). The shape of the passage (4) will therefore preferably not be a circle, but a shape with lobes or obstructions which retain the shreds so that they can be cut more easily.

As the shreds which are produced in the shredding chamber (2) and sucked off may also be relatively moist and are sometimes cut very finely, care has to be taken to prevent the fan and the fan chamber from becoming covered and clogged up. Therefore, the fan (7) has three functions: 1) the fan has to generate suction force to be able to suck the shreds out of the shredding chamber (2); 2) it has to ensure that the fan chamber (6) does not clog up with shreds; and finally 3) the fan (7) has to blow the shreds out of the fan chamber or hurl them away so that they are removed from the shredder (1).

When designing the fan blades, it is therefore important that these always adjoin the casing of the fan chamber (6) as closely as possible. This creates a brushing (cleaning) effect, as it were, which keeps the casing of the fan chamber (7) clean and prevents adhesion.

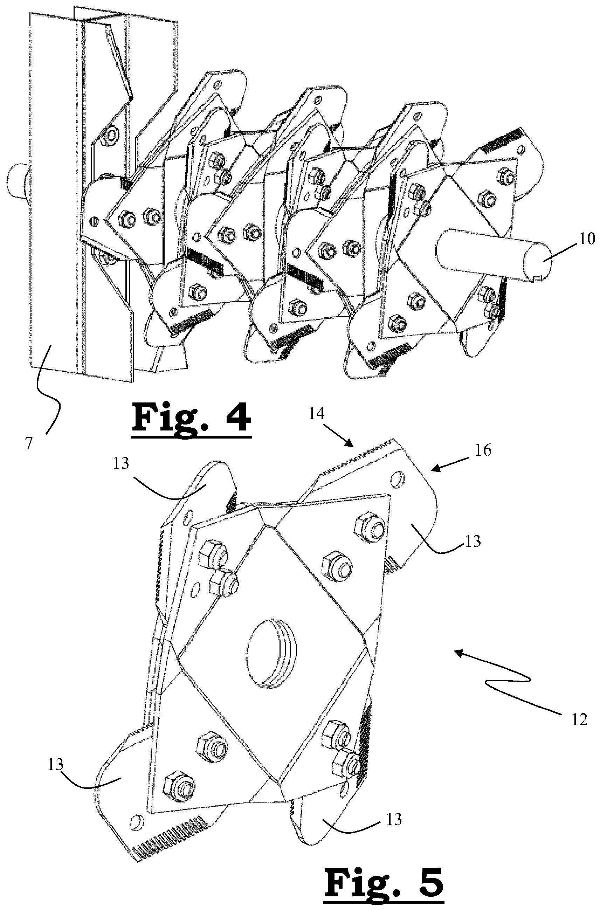

As the fan (7) produces suction force and ejects shreds to the outside, one of the possible embodiments (see Fig. 4) of the fan may consist of a fan having two vane blades, which have better ejecting properties.

In order to be able to readily move the shredder (1), it is provided with a number of wheels, preferably two or four.

## Claims

1. Shredder (1) for comminuting organic material to form shreds, comprising one introduction funnel (5) for supplying organic material, a shredding chamber (2) provided with rotatable cutting means (3) for shredding the supplied organic material into shreds and a fan chamber (6) containing a fan (7) which is connected to the shredding chamber (2) via a centrally situated passage (4) for the shreds formed, which is provided between the shredding chamber (2) and the fan chamber (6), wherein the fan (7) is configured to generate a suction force which will suck the shreds out of the shredding chamber (2) via the passage (4) and will remove these from the fan chamber (6) via a discharge opening (8), the cutting means (3) comprising at least two adjacent cutting blade groups (12) which are fixedly fitted next to one another onto the periphery of a shaft (10) and rotatably arranged in front of an anvil (11), wherein said cutting blade groups (12) each comprise several splitting blades (13) which are intended for splitting supplied organic material substantially along the direction of introduction of the material, centre of the passage (4) is situated on the shaft (10) of the cutting blade groups (12), and in that the shredder (1) further comprises obstruction means which are configured to counteract the shred-conveying airflow in the direction of the passage (4) in order to increase the residence time of the shreds in the shredding chamber, wherein in order to form the obstruction means the cutting face (14) of a number of cutting blades (13) has a bevel which is positioned in such a manner that, in use, the shreds formed are flung in a direction away from the passage (4).

2. Shredder (1) according to Claim 1, **characterized in that** the size of the passage (4) is adjustable and/or the shape of the passage (4) is adjustable.

3. Shredder (1) according to one of the preceding claims, **characterized in that** the cutting blades (13) within one cutting blade group are fitted on the shaft in a manner offset with respect to each other, so that the projections of their cutting faces on the anvil (11) do not coincide and cover the entire introduction width.

4. Shredder (1) according to one of the preceding claims, **characterized in that** the cutting blades (13) of cutting blade groups (12) which have been fitted next to one another are situated offset opposite one another, so that each of these acts on the supplied organic material at a different point in time.

5. Shredder according to one of the preceding claims, **characterized in that** the cutting blades furthermore comprise a back face (16) which is intended to slow down the speed of introduction of organic material into the shredding chamber.

6. Shredder (1) according to one of the preceding claims, **characterized in that** the casing of the shredding chamber (2) comprises one or more guide elements which are configured to guide the shreds in the direction of the cutting means (3).

7. Shredder (1) according to one of the preceding claims, **characterized in that** the casing of the shredding chamber (2) comprises one or more hook-shaped restraining elements (17) which are configured to slow down fibre strands.

8. Shredder (1) according to one of the preceding claims, **characterized in that** the fan (7) comprises a number of blades (15) fitted on a shaft (10), in which one or more blades (15) are provided with cutting elements so as to provide a supplementary cutting of the sucked-in shreds.

9. Shredder (1) according to one of the preceding claims, **characterized in that** the fan (7) comprises two vane-shaped blades which are configured to clean the casing surface of the fan chamber.

10. Shredder (1) according to one of the preceding claims, **characterized in that** the shredder (1) comprises at most one introduction funnel (5) which is suitable for manually supplying organic material.

## Patentansprüche

1. Häcksler (1) zum Feinzerkleinern von organischem Material zum Bilden von Häckseln, umfassend einen Einführungstrichter (5) zum Zuführen von organischem Material, eine Häckselkammer (2), bereitgestellt mit drehbaren Schneidmitteln (3) zum Häckseln des zugeführten organischen Materials in Häcksel und eine Gebläsekammer (6), die ein Gebläse (7) enthält, das mit der Häckselkammer (2) über einen mittig positionierten Durchgang (4) für die gebildeten Häcksel verbunden ist, der zwischen der Häckselkammer (2) und der Gebläsekammer (6) bereitgestellt ist, wobei das Gebläse (7) dazu ausgelegt ist, eine Saugkraft zu erzeugen, die die Häcksel aus der Häckselkammer (2) über den Durchgang (4) heraussaugt und diese über eine Auslassöffnung (8) aus der Gebläsekammer (6) entfernt, wobei die Schneidemittel (3) mindestens zwei angrenzende Schneidklingengruppen (12) umfassen, die fest nebeneinander an der Peripherie einer Welle (10) befestigt und drehbar vor einem Amboss (11) angeordnet sind, wobei die Schneidklingengruppen (12) jeweils mehrere Zerteilungsklingen (13) umfassen, die zum Zerteilen des zugeführten organischen Materials im Wesentlichen entlang der Richtung der Einführung des Materials dienen,
**dadurch gekennzeichnet, dass** sich die Mitte des Durchgangs (4) an der Welle (10) der Schneidklingengruppen (12) befindet, und dadurch, dass der Häcksler (1) ferner Behinderungsmittel umfasst, die dazu ausgelegt sind, dem häckselfördernden Luftstrom in der Richtung des Durchgangs (4) entgegenzuwirken, um die Verweilzeit der Häcksel in der Häckselkammer zu verlängern, wobei, um die Behinderungsmittel zu bilden, die Schneidfläche (14) einer Anzahl von Schneidklingen (13) eine Anfasung aufweist, die in einer Weise positioniert ist, dass, in Verwendung, die gebildeten Häcksel in eine Richtung weg vom Durchgang (4) geschleudert werden.

2. Häcksler (1) nach Anspruch 1, **dadurch gekennzeichnet, dass** die Größe des Durchgangs (4) einstellbar und/oder die Form des Durchgangs (4) einstellbar ist.

3. Häcksler (1) nach einem der vorhergehenden Ansprüche, **dadurch gekennzeichnet, dass** die Schneidklingen (13) innerhalb einer Schneidklingengruppe an der Welle in einer Weise befestigt sind, die bezüglich zueinander versetzt ist, sodass die Vorsprünge ihrer Schneidflächen auf dem Amboss (11) nicht übereinstimmen und die gesamte Einführungsbreite abdecken.

4. Häcksler (1) nach einem der vorhergehenden Ansprüche, **dadurch gekennzeichnet, dass** die Schneidklingen (13) von Schneidklingengruppen (12), die nebeneinander befestigt wurden, versetzt einander gegenüberliegend positioniert sind, sodass jede dieser zu einem unterschiedlichen Zeitpunkt auf das zugeführte organische Material wirkt.

5. Häcksler nach einem der vorhergehenden Ansprüche, **dadurch gekennzeichnet, dass** die Schneidklingen ferner eine Rückfläche (16) umfassen, die dazu dient, die Geschwindigkeit der Einführung von organischem Material in die Häckselkammer zu verlangsamen.

6. Häcksler (1) nach einem der vorhergehenden Ansprüche, **dadurch gekennzeichnet, dass** das Gehäuse der Häckselkammer (2) ein oder mehrere Führungselemente umfasst, die dazu ausgelegt sind, die Häcksel in Richtung der Schneidmittel (3) zu führen.

7. Häcksler (1) nach einem der vorhergehenden Ansprüche, **dadurch gekennzeichnet, dass** das Gehäuse der Häckselkammer (2) ein oder mehrere hakenförmige Halteelemente (17) umfasst, die dazu ausgelegt sind, Faserstränge zu verlangsamen.

8. Häcksler (1) nach einem der vorhergehenden Ansprüche, **dadurch gekennzeichnet, dass** das Gebläse (7) eine Anzahl von Klingen (15) umfasst, die an einer Welle (10) befestigt sind, wobei eine oder mehrere Klingen (15) mit Schneidelementen versehen sind, um ein zusätzliches Schneiden der eingesaugten Häcksel bereitzustellen.

9. Häcksler (1) nach einem der vorhergehenden Ansprüche, **dadurch gekennzeichnet, dass** das Gebläse (7) zwei schaufelförmige Klingen umfasst, die dazu ausgelegt sind, die Gehäuseoberfläche der Gebläsekammer zu reinigen.

10. Häcksler (1) nach einem der vorhergehenden Ansprüche, **dadurch gekennzeichnet, dass** der Häcksler (1) zumindest einen Einführungstrichter (5) umfasst, der zum manuellen Einführen von organischem Material geeignet ist.

## Revendications

1. Broyeur (1) servant à triturer une matière organique pour former des fragments, comprenant une trémie d'introduction (5) pour l'introduction de matière organique, une chambre de broyage (2) pourvue d'un moyen de coupe rotatif (3) servant à broyer la matière organique introduite pour en faire des fragments et une chambre de ventilateur (6) contenant un ventilateur (7) qui est reliée à la chambre de broyage (2) par le biais d'un passage en position centrale (4) pour les fragments formés, qui est prévu entre la chambre de broyage (2) et la chambre de ventilateur (6), le ventilateur (7) étant conçu pour générer une force d'aspiration qui va aspirer les fragments hors de la chambre de broyage (2) à travers le passage (4) et va les enlever de la chambre de ventilateur (6) à travers une ouverture de rejet (8), le moyen de coupe (3) comprenant au moins deux groupes de lames de coupe (12) adjacents qui sont installés de manière fixe l'un à côté de l'autre sur la périphérie d'un arbre (10) et placés à rotation devant un contre-outil (11), lesdits groupes de lames de coupe (12) comprenant chacun plusieurs lames à refendre (13) qui sont destinées à refendre la matière organique introduite essentiellement le long de la direction d'introduction de la matière,
**caractérisé en ce que**
le centre du passage (4) est situé sur l'arbre (10) des groupes de lames de coupe (12), et
**en ce que** le broyeur (1) comprend en outre des moyens d'obstruction qui sont conçus pour faire opposition à l'écoulement d'air transportant les fragments dans la direction du passage (4) afin d'augmenter le temps de séjour des fragments dans la chambre de broyage, la face de coupe (14) d'un certain nombre de lames de coupe (13) ayant, pour former les moyens d'obstruction, un biseau qui est positionné de manière que, lors de l'utilisation, les fragments formés sont projetés dans une direction s'éloignant du passage (4).

2. Broyeur (1) selon la revendication 1, **caractérisé en ce que** la taille du passage (4) est ajustable et/ou la forme du passage (4) est ajustable.

3. Broyeur (1) selon l'une des revendications précédentes, **caractérisé en ce que** les lames de coupe (13) au sein d'un groupe de lames de coupe sont installées sur l'arbre de manière décalée les unes par rapport aux autres, de telle sorte que les projections de leurs faces de coupe sur le contre-outil (11) ne coïncident pas et couvrent toute la largeur d'introduction.

4. Broyeur (1) selon l'une des revendications précédentes, **caractérisé en ce que** les lames de coupe (13) de groupes de lames de coupe (12) qui ont été installés les uns à côté des autres sont situées de manière décalée à l'opposé les unes des autres, de telle sorte que chacune d'elles agit sur la matière organique introduite à un moment différent.

5. Broyeur selon l'une des revendications précédentes, **caractérisé en ce que** les lames de coupe comprennent en outre une face arrière (16) qui est destinée à réduire la vitesse d'introduction de la matière organique dans la chambre de broyage.

6. Broyeur (1) selon l'une des revendications précédentes, **caractérisé en ce que** l'enveloppe de la chambre de broyage (2) comprend un ou plusieurs éléments de guidage qui sont conçus pour guider les fragments dans la direction du moyen de coupe (3).

7. Broyeur (1) selon l'une des revendications précédentes, **caractérisé en ce que** l'enveloppe de la chambre de broyage (2) comprend un ou plusieurs éléments de retenue (17) en forme de crochets qui sont conçus pour ralentir les brins fibreux.

8. Broyeur (1) selon l'une des revendications précédentes, **caractérisé en ce que** le ventilateur (7) comprend un certain nombre de pales (15) installées sur un arbre (10), une ou plusieurs des pales (15) étant pourvues d'éléments tranchants afin d'assurer un découpage supplémentaire des fragments aspirés.

9. Broyeur (1) selon l'une des revendications précédentes, **caractérisé en ce que** le ventilateur (7) comprend deux pales en forme d'aubes qui sont conçues pour nettoyer la surface d'enveloppe de la chambre de ventilateur.

10. Broyeur (1) selon l'une des revendications précédentes, **caractérisé en ce que** le broyeur (1) comprend au plus une trémie d'introduction (5) qui est appropriée pour l'introduction manuelle de matière organique.
